# EUROPEAN PATENT SPECIFICATION

(11) **EP 3 012 555 B1**
(45) Date of publication and mention of the grant of the patent: **13.01.2021**
(21) Application number: 13887098.5
(22) Date of filing: 19.06.2013
(51) Int. Cl.: F25B 1/00, C09K 5/04, F25B 43/00

(54) **REFRIGERATION CYCLE DEVICE**
KÄLTEKREISLAUFVORRICHTUNG
DISPOSITIF À CYCLE DE RÉFRIGÉRATION

(43) Date of publication of application: 27.04.2016
(73) Proprietor: Mitsubishi Electric Corporation, Chiyoda-ku Tokyo 100-8310 (JP)
(72) Inventor: ITO, Daisuke, Tokyo 1008310 (JP); MAEYAMA, Hideaki, Tokyo 100-8310 (JP); OKAZAKI, Takashi, Tokyo 100-8310 (JP); UGAJIN, Yuki, Tokyo 100-8310 (JP); KATO, Yohei, Tokyo 100-8310 (JP)
(74) Representative: Pfenning, Meinig & Partner mbB
(86) International application number: PCT/JP2013/066867
(87) International publication number: WO 2014/203355

(56) References cited:
- WO-A1-2012/157764
- JP-A- H08 189 731
- JP-A- H09 217 970
- JP-A- H10 205 936
- JP-A- H10 506 131
- JP-A- 2001 272 141
- JP-A- 2003 302 110
- JP-A- 2003 302 110
- JP-A- 2011 043 276
- JP-A- 2011 237 146
- JP-A- 2012 057 812
- JP-A- 2012 131 994

## Description

### Technical Field

The present invention relates to refrigeration cycle apparatus.

### Background Art

HFO-1234yf (CF₃CF=CH₂) is a propylenic fluorohydrocarbon used as low GWP (global warming potential) refrigerant in the field of automobile air-conditioning apparatus.

Propylenic fluorohydrocarbons having a double bond in the composition are generally prone to decomposition or polymerization due to the presence of the double bond. Sliding units in a compressor become hot to increase the probability of the occurrence of the decomposition or polymerization of propylenic fluorohydrocarbons. Patent Literature 1 describes that the surface of such sliders is composed of a nonmetallic material to control the occurrence of the decomposition or polymerization.

Patent Literature 2 describes a technique directed to tetrafluoroethylene that is useful as a monomer in the production of fluororesins and fluoroelastomers having excellent properties such as heat resistance and chemical resistance. Patent Literature 2 describes that because tetrafluoroethylene is highly susceptible to polymerization, a polymerization inhibitor is added to control the occurrence of the polymerization during the storage of tetrafluoroethylene.

### Citation List

### Patent Literature

Patent Literature 1: Japanese Unexamined Patent Application Publication No. 2009-299649
Patent Literature 2: Japanese Unexamined Patent Application Publication No. 11-246447

### Summary of Invention

### Technical Problem

Because the standard boiling point of HFO-1234yf is as high as -29 degrees C, this propylenic fluorohydrocarbon refrigerant has a lower operating pressure and a lower refrigeration capacity per suction volume as compared to other refrigerants conventionally used in stationary air-conditioning apparatus such as R410A refrigerant (standard boiling point -51 degrees C). For a stationary air-conditioning apparatus using HFO-1234yf refrigerant to achieve a refrigeration capacity comparable to R410A refrigerant, it is necessary to increase the volume flow rate of the refrigerant. This fact brings about challenges in increasing the displacement of the compressor, and also causes a problematic increase in pressure loss and a decrease in efficiency associated with increasing the volume flow rate.

Thus, low GWP refrigerant used in stationary air-conditioning apparatus appropriately has a low standard boiling point. In general, refrigerants tend to have a lower boiling point with decreasing number of carbon atoms. Thus, the present inventors made attempts to use ethylenic fluorohydrocarbons having less carbon atoms (two carbon atoms) than propylenic fluorohydrocarbons (having three carbon atoms) as refrigerant.

However, ethylenic fluorohydrocarbons have a double bond similarly to propylenic fluorohydrocarbons, are more reactive than propylenic fluorohydrocarbons, and are thermally and chemically instable to show high susceptibility to decomposition or polymerization. Thus, a problem has been found that it is difficult to control the occurrence of the decomposition or polymerization by the technique described in Patent Literature 1 alone.

Ethylenic fluorohydrocarbons have another problem in that they are decomposed by the reaction with water in refrigeration cycles, failing to exhibit the desired performance as refrigerant. Document WO 2012 157764 A1 discloses a refrigeration cycle according to the preamble of claim 1.

The present invention has been made to solve the problems discussed above. An object of the invention is to provide a refrigeration cycle apparatus capable of control an occurrence of the decomposition of an ethylenic fluorohydrocarbon or a mixture including an ethylenic fluorohydrocarbon used as refrigerant.

### Solution to Problem

A refrigeration cycle apparatus according to the present invention includes a refrigerant circuit including the features of claim 1.

### Advantageous Effects of Invention

According to the present invention, the occurrence of the decomposition of an ethylenic fluorohydrocarbon or a mixture including an ethylenic fluorohydrocarbon used as refrigerant may be controlled by absorbing water in the refrigerant with the moisture absorbing unit.

### Brief Description of Drawings

[Fig. 1] Fig. 1 is a refrigerant circuit diagram illustrating a schematic configuration of a refrigeration cycle apparatus 1 according to Embodiment 1 of the invention.
[Fig. 2] Fig. 2 is a view illustrating examples of ethylenic fluorohydrocarbons used as refrigerant in the refrigeration cycle apparatus 1 according to Embodiment 1 which does not belong to the present invention.
[Fig. 3] Fig. 3 is a refrigerant circuit diagram illustrating a schematic configuration of a refrigeration cycle apparatus 2 according to Embodiment which does not belong to the present invention.
[Fig. 4] Fig. 4 is a view illustrating a chemical reaction formula of a hydrolysis of ester oil.
[Fig. 5] Fig. 5 is a view illustrating a chemical reaction formula of a dehydration of ether oil.
[Fig. 6] Fig. 6 is a refrigerant circuit diagram illustrating a schematic configuration of a refrigeration cycle apparatus 4 according to Embodiment 4 which does not belong to the present invention.
[Fig. 7] Fig. 7 is a refrigerant circuit diagram illustrating an exemplary modified configuration of the refrigeration cycle apparatus according to Embodiment 1 of the invention.
[Fig. 8] Fig. 8 is a refrigerant circuit diagram illustrating another exemplary modified configuration of the refrigeration cycle apparatus according to Embodiment 1.

### Description of Embodiments

### Embodiment 1

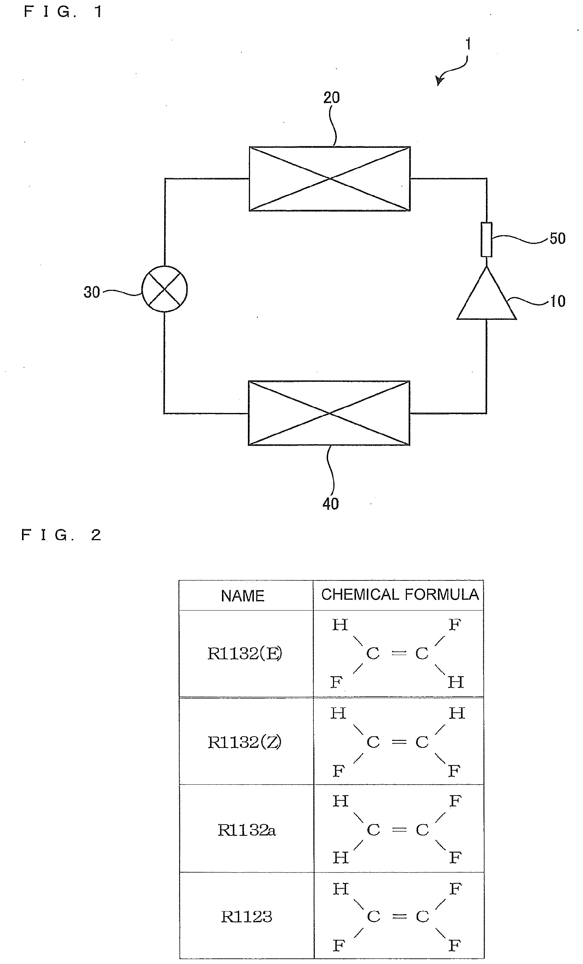

A refrigeration cycle apparatus according to Embodiment 1 will be described. Fig. 1 is a refrigerant circuit diagram illustrating a schematic configuration of a refrigeration cycle apparatus 1 according to Embodiment 1. As illustrated in Fig. 1, the refrigeration cycle apparatus 1 includes a refrigerant circuit connecting in an order of a compressor 10, a condenser 20, an expansion device 30, and an evaporator 40 in series through refrigerant pipes.

The compressor 10 is fluid machinery that suctions and compresses low-temperature low-pressure refrigerant and discharges it as high-temperature high-pressure refrigerant. The condenser 20 is a heat exchanger that condenses the refrigerant discharged from the compressor 10, by heat exchange with external fluid (for example, air). The expansion device 30 depressurizes and expands the refrigerant condensed in the condenser 20 and discharges it as two-phase gas-liquid refrigerant having low temperature and low pressure. The expansion device 30 is, for example, an expansion valve or a capillary tube. The evaporator 40 is a heat exchanger that evaporates the two-phase gas-liquid refrigerant discharged from the expansion device 30, by heat exchange with the external fluid (for example, air).

The refrigerant that is circulated in the refrigerant circuit is an ethylenic fluorohydrocarbon or a mixture including an ethylenic fluorohydrocarbon, which has a low boiling point similarly to R410A. Fig. 2 illustrates examples of ethylenic fluorohydrocarbons used as the refrigerant in the refrigeration cycle apparatus 1 according to Embodiment 1. While trans-1,2-difluoroethylene (R1132 (E)) shown on the top column in Fig. 2 is used as the refrigerant in Embodiment 1, use is possible of the other ethylenic fluorohydrocarbons shown in the other columns in Fig. 2 as well as ethylenic fluorohydrocarbons that are not illustrated. Specifically, the refrigerant may be one or more of, for example, R1132 (E), cis-1,2-difluoroethylene (R1132 (Z)), 1,1-difluoroethylene (R1132a), 1,1,2-trifluoroethylene (R1123), fluoroethylene (R1141) and derivatives of these compounds resulting from the substitution of one fluorine (F) in the composition with another halogen element (CI, Br, I or At).

In the inside of the compressor 10 (at the bottom of a hermetic enclosure), refrigerating machine oil for lubricating sliding units in the compressor 10 is reserved. A part of the refrigerating machine oil is circulated in the refrigerant circuit together with the refrigerant. The viscosity of the refrigerating machine oil is selected so that the sliding units in the compressor 10 are lubricated sufficiently and the compressor efficiency is not decreased even after the dissolution of the refrigerant into the refrigerating machine oil. The kinematic viscosity of the refrigerating machine oil (base oil) is generally about 5 to 300 cSt at 40 degrees C.

The refrigerating machine oil contains 0.1% to 5% of limonene as a polymerization inhibitor for controlling the polymerization of the refrigerant. Other exemplary polymerization inhibitors added to the refrigerating machine oil include terpene hydrocarbons such as pecan, camphene, cymene and terpinene, and terpene alcohols such as citronellol, terpineol and borneol.

The ethylenic fluorohydrocarbon used as the refrigerant in Embodiment 1 has a double bond in the composition and is thermally and chemically instable to show high susceptibility to chemical decomposition and polymerization reactions. Of these reactions, the polymerization reaction of the refrigerant may be controlled with the polymerization inhibitor described above.

The refrigeration cycle apparatus 1 of Embodiment 1 includes a dryer 50 to prevent, in particular, the refrigerant from hydrolysis by the reaction with water. The dryer 50 serves as a moisture absorbing unit that absorbs water in the refrigerant. For example, the dryer 50 is a tubular body filled with a particulate desiccant, and allows the refrigerant to pass therethrough and absorbs water in the refrigerant while the refrigerant is passed. In the refrigerant circuit, the dryer 50 is disposed on the discharge side of the compressor 10 (at least, upstream from the condenser 20).

In general, a dryer that dehydrates a refrigeration cycle is frequently disposed on the inlet side of an expansion device. The reason for this is because if the refrigerant flowing into the expansion device contains water, the water in the refrigerant is frozen as the refrigerant is cooled in the expansion device, thus causing a risk that the passage may be clogged. Dehydration in a refrigeration cycle is important particularly when the refrigerant used is highly hygroscopic.

In contrast, the dryer 50 in Embodiment 1 is provided mainly for the purpose of preventing the hydrolysis of the ethylenic fluorohydrocarbon. The ethylenic fluorohydrocarbon is easily hydrolyzed at high temperature or high pressure. Thus, the dryer 50 in Embodiment 1 is disposed in the high-temperature high-pressure section in the refrigeration cycle where the ethylenic fluorohydrocarbon is likely to be hydrolyzed, specifically, is disposed on the discharge side of the compressor 10.

The discharge temperature of the ethylenic fluorohydrocarbon (for example, R1132 (E) or R1132 (Z)) during normal operation is slightly lower than the discharge temperature of R410A and is slightly higher than the discharge temperature of R1234yf (HFO-1234yf) (for example, R410A: 100 degrees C, R1234yf: 80 degrees C, R1132: 90 degrees C, although variable depending on the operation conditions). The decomposition onset temperature of the ethylenic fluorohydrocarbon is lower by about 10 to 20 degrees C than the decomposition onset temperature of R1234yf similarly having a double bond (for example, R410A: 180 degrees C, R1234yf: 120 degrees C, R1132: 100 degrees C). Thus, the temperature difference between the decomposition onset temperature and the discharge temperature during normal operation with the ethylenic fluorohydrocarbon is smaller than those in the case of the conventional R410A and R1234yf refrigerants (in the case of the above examples, R410A: 80 degrees C, R1234yf: 40 degrees C, R1132: 10 degrees C). That is, the ethylenic fluorohydrocarbon used as the refrigerant in refrigeration cycles is subjected to a discharge temperature during normal operation that is close to the decomposition onset temperature of the refrigerant itself. It is therefore necessary that the discharge temperature during the operation of refrigeration cycles using the ethylenic fluorohydrocarbon as the refrigerant be lower than that using R410A or R1234yf. In other words, refrigeration cycles using the ethylenic fluorohydrocarbon as the refrigerant are to be operated at a lower discharge temperature than the refrigeration cycles using R410A or R1234yf.

In refrigeration cycles using conventional refrigerant, the discharge temperature is high. Thus, when a dryer 50 is disposed on the discharge side of a compressor 10, a desiccant in the dryer 50 is easily degraded due to the generation of acids by the hydrolysis of refrigerating machine oil. In contrast, refrigeration cycles using the ethylenic fluorohydrocarbon as the refrigerant are operated at a decreased discharge temperature. Hence, the desiccant is negligibly degraded and achieves an enhancement in dehydration rate even when the dryer 50 is disposed on the discharge side of the compressor 10. Further, the removal of water from the refrigerant on the discharge side of the compressor 10 results in a decrease in the amount of water present in the refrigerant flowing into the expansion device 30. Consequently, it becomes possible to prevent the clogging of the passage of the expansion device 30 due to the freezing of water. The refrigeration cycle apparatus 1 thus achieves an enhancement in long-term reliability.

While Embodiment 1 illustrates the dryer 50 as being disposed only on the discharge side of the compressor 10, dryers may be disposed both on the discharge side of the compressor 10 and on the inlet side of the expansion device 30. Such a refrigeration cycle corresponding to that of Embodiment 1, with an additional dryer placed on the inlet side of the expansion valve, belongs to the present invention. These dryers both serve as moisture absorbing units. In this manner, the rate of the dehydration of the refrigerant may be further increased.

In the refrigeration cycle apparatus 1 configured as described above, the high-temperature high-pressure refrigerant discharged from the compressor 10 first flows into the dryer 50. The refrigerant flowing in the dryer 50 is dehydrated. As a result, the refrigerant is prevented from being hydrolyzed in the high-temperature high-pressure section in the refrigerant circuit (at least in the downstream from the dryer 50). The refrigerant coming out from the dryer 50 flows into the condenser 20 and is condensed by being cooled by heat exchange with external fluid. The external fluid passing through the condenser 20 is heated by the heat exchange with the refrigerant. The refrigerant coming out from the condenser 20 is depressurized and expanded in the expansion device 30. The depressurized and expanded refrigerant then flows into the evaporator 40 and is evaporated by being heated by heat exchange with the external fluid. The external fluid passing through the evaporator 40 is cooled by the heat exchange with the refrigerant. The refrigerant coming out from the evaporator 40 is suctioned into the compressor 10 and is compressed again. The refrigeration cycle apparatus 1 performs these actions repeatedly.

As described above, the refrigeration cycle apparatus 1 according to Embodiment 1 includes the refrigerant circuit including at least the compressor 10, the condenser 20, the expansion device 30, and the evaporator 40. The refrigerant circuit circulates refrigerant being an ethylenic fluorohydrocarbon or a mixture including an ethylenic fluorohydrocarbon. The refrigeration cycle apparatus 1 further includes the moisture absorbing unit (in Embodiment 1, the dryer 50) configured to absorb water in the refrigerant.

With the above configuration, water in the refrigerant can be absorbed with the dryer 50. Thus, the hydrolysis of the refrigerant may be controlled even when the refrigerant used is an ethylenic fluorohydrocarbon or a mixture including an ethylenic fluorohydrocarbon, which is susceptible to hydrolysis. Thus, the refrigeration cycle apparatus 1 allows an ethylenic fluorohydrocarbon or a mixture including an ethylenic fluorohydrocarbon to exhibit the desired performance as refrigerant over a long period, and consequently the long-term reliability of the refrigeration cycle apparatus 1 may be enhanced. Further, the use of an ethylenic fluorohydrocarbon having a low standard boiling point and a low GWP or a mixture including such an ethylenic fluorohydrocarbon as refrigerant allows the refrigeration cycle apparatus 1 to exhibit high efficiency, to save energy consumption, and to achieve high environmental performance.

Further, the refrigeration cycle apparatus 1 of Embodiment 1 is characterized in that the moisture absorbing unit includes the dryer 50 that has a desiccant that allows the refrigerant to pass therethrough and absorbs water in the refrigerant while the refrigerant is passed, and the dryer 50 is disposed on the discharge side of the compressor 10 in the refrigerant circuit.

With the above configuration, water in the refrigerant may be removed more reliably in the high-temperature section in the refrigerant circuit in which the ethylenic fluorohydrocarbon is likely to be hydrolyzed. As a result, the hydrolysis of the refrigerant may be controlled more effectively.

For example, the ethylenic fluorohydrocarbon includes any one of R1141, R1132 (E), R1132 (Z), R1132a and R1123.

### Embodiment 2

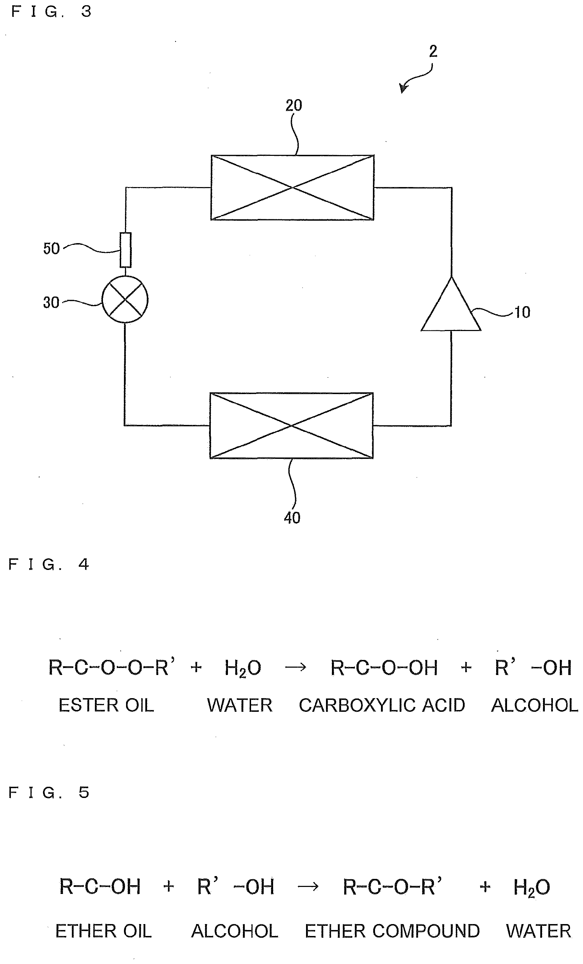

A refrigeration cycle apparatus according to Embodiment 2 will be described. Fig. 3 is a refrigerant circuit diagram illustrating a schematic configuration of a refrigeration cycle apparatus 2 according to Embodiment 2. The features having the same functions and effects as in the refrigeration cycle apparatus 1 of Embodiment 1 will be indicated with the same reference signs and the description thereof will be omitted. Similarly to Embodiment 1, the refrigerant used in Embodiment 2 is an ethylenic fluorohydrocarbon or a mixture including an ethylenic fluorohydrocarbon. In the refrigeration cycle apparatus 2 according to Embodiment 2, as illustrated in Fig. 3, a dryer 50 is disposed on the inlet side of an expansion device 30.

In Embodiment 2, an ester synthetic oil having an ester bond in the composition (for example, at least one of an ester oil, a carbonate oil, and a polyol ester oil (POE)) is used as a refrigerating machine oil. These ester oils have a high polarity and exhibit a high affinity for water, thus showing relatively high hygroscopic properties. Thus, in Embodiment 2, the hygroscopic ester oil serves as a moisture absorbing unit that absorbs water in the refrigerant.

The refrigeration cycle apparatus 2 according to Embodiment 2 is characterized in that the moisture absorbing unit includes a hygroscopic refrigerating machine oil. With this configuration, water in the refrigerant may be absorbed by the refrigerating machine oil and hence the hydrolysis of the refrigerant may be controlled.

The refrigeration cycle apparatus 2 of Embodiment 2 is characterized in that the refrigerating machine oil is at least one oil having an ester bond selected from an ester oil, a carbonate oil, and a polyol ester oil. With this configuration, water in the refrigerant may be absorbed by the highly hygroscopic oil such as an ester oil, a carbonate oil, or a polyol ester oil, and hence the hydrolysis of the refrigerant may be controlled.

### Embodiment 3

A refrigeration cycle apparatus according to Embodiment 3 will be described. For example, the refrigerant circuit of the refrigeration cycle apparatus according to Embodiment 3 has the same configuration as the refrigerant circuit of the refrigeration cycle apparatus 2 illustrated in Fig. 3. Similarly to Embodiments 1 and 2, the refrigerant used in Embodiment 3 is an ethylenic fluorohydrocarbon or a mixture including an ethylenic fluorohydrocarbon. In Embodiment 3, an ether synthetic oil having an ether bond ("-O-") in the composition (for example, a polyvinyl ether oil (PVE) and a polyalkylene glycol oil (PAG)) is used as a refrigerating machine oil. These ether oils have a high polarity and exhibit a high affinity for water, thus showing relatively high hygroscopic properties. Thus, in Embodiment 3, the hygroscopic ether oil serves as a moisture absorbing unit that absorbs water in the refrigerant.

The refrigeration cycle apparatus according to Embodiment 3 is characterized in that the refrigerating machine oil is an ether oil having an ether bond such as a polyalkylene glycol oil or a polyvinyl ether oil. With this configuration, water in the refrigerant may be absorbed by the highly hygroscopic ether oil and hence the hydrolysis of the refrigerant may be controlled.

Embodiment 3 involving an ether oil can realize a refrigeration cycle apparatus outperforming the refrigeration cycle apparatus of Embodiment 2 using an ester oil. The reasons will be described below. Fig. 4 illustrates a chemical reaction formula of a hydrolysis of ester oil. As illustrated in Fig. 4, the hydrolysis of an ester oil produces a carboxylic acid and an alcohol, and the reaction shown in Fig. 4 occurs repeatedly under the catalysis of the carboxylic acid. Thus, ester oils are hygroscopic but are poorly stable at the same time. On the other hand, Fig. 5 illustrates a chemical reaction formula of a dehydration of ether oil. As illustrated in Fig. 5, an ether oil, after water is absorbed, is decomposed into an ether compound and water (dehydrated), and thus the ether nature is not lost even after the decomposition. As a result, the amount of water in the refrigeration cycle may be reduced to below a certain level. Thus, Embodiment 3 can realize a refrigeration cycle apparatus that is excellent not only in the stability of the refrigerant but also in the stability of the refrigerating machine oil. Further, the reaction involving an ether oil does not produce any acids, in contrast to ester oils, and hence the chemical degradation of the desiccant by acids may be prevented.

### Embodiment 4

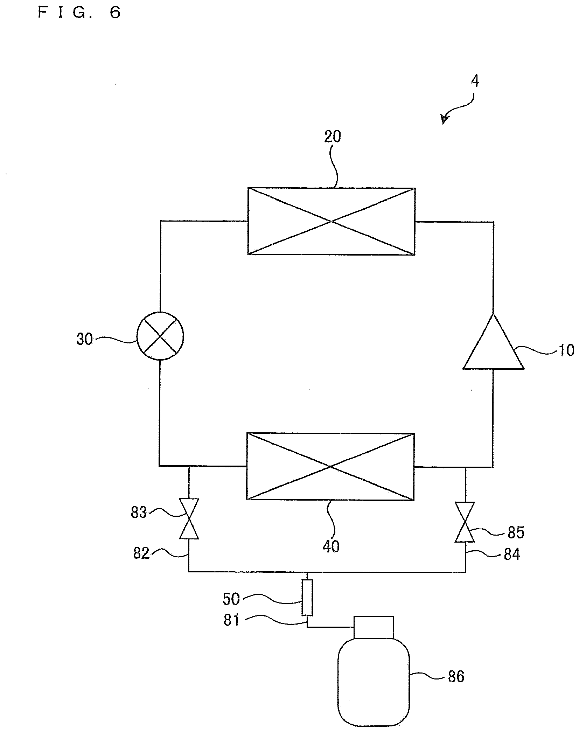

A refrigeration cycle apparatus according to Embodiment 4 will be described. Fig. 6 is a refrigerant circuit diagram illustrating a schematic configuration of a refrigeration cycle apparatus 4 according to Embodiment 4. The features having the same functions and effects as in the refrigeration cycle apparatus 1 of Embodiment 1 will be indicated with the same reference signs and the description thereof will be omitted. Similarly to Embodiment 1, the refrigerant used in Embodiment 4 is an ethylenic fluorohydrocarbon or a mixture including an ethylenic fluorohydrocarbon. In the refrigeration cycle apparatus 4 according to Embodiment 4, as illustrated in Fig. 6, a refrigerant inlet 81 is disposed on the low-pressure side in the refrigerant circuit (for example, between the outlet of an expansion device 30 and the inlet of a compressor 10) and the refrigerant is to be charged into the refrigerant circuit through the refrigerant inlet 81. The refrigerant inlet 81 is connected to a low-pressure pipe between the outlet of the expansion device 30 and the inlet of an evaporator 40 via a branched pipe 82 and a valve 83 disposed on the branched pipe 82, and is connected to a low-pressure pipe between the outlet of the evaporator 40 and the inlet of the compressor 10 via a branched pipe 84 and a valve 85 disposed on the branched pipe 84. When the refrigerant is to be charged, a refrigerant cylinder 86 is connected to the refrigerant inlet 81 and the valves 83 and 85 are opened.

In Embodiment 4, a dryer 50 is disposed in the refrigerant inlet 81. In addition to at the refrigerant inlet 81, the dryers 50 may be disposed also in the refrigerant circuit (the refrigeration cycle) (for example, on the discharge side of the compressor 10 and the inlet side of the expansion device 30). Further, the dryer 50 may be disposed on the charger side (on the refrigerant cylinder 86 side) instead of on the refrigerant inlet 81 (on the refrigeration cycle apparatus 4 side). The ethylenic fluorohydrocarbon refrigerants have higher hygroscopic properties than other refrigerants such as R410A and R1234yf, and are therefore more prone to reaction with water (dehydration). Further, charging the refrigerant increases the chance for water to enter the refrigerant circuit. Thus, the refrigerant is charged while water is removed with the dryer 50 during the charging of the refrigerant. In this manner, the reaction between the refrigerant and water may be controlled. The refrigeration cycle apparatus 4 according to Embodiment 4 can realize a high dehydration rate and high reliability.

### Embodiment 5

A refrigeration cycle apparatus according to Embodiment 5 will be described. A characteristic of Embodiment 5 resides in the pore size of the desiccant present in the dryer 50. The desiccant has a pore structure having many pores (a porous structure). The desiccant absorbs water in the refrigerant by adsorbing water molecules into the pores. The rate of the dehydration with the desiccant may be increased by ensuring that water molecules are selectively adsorbed into the pores while the refrigerant molecules are prevented from being adsorbed. The molecular size of water is 0.28 nm, and the molecular size of the ethylenic fluorohydrocarbon refrigerant is 0.33 to 0.4 nm. It is therefore desirable that the desiccant have pore sizes that are equal to or larger than the molecular size of water and are equal to or smaller than the molecular size of the refrigerant. In Embodiment 5, the desiccant is designed to have pore sizes of 0.275 nm to 0.334 nm. In this manner, the rate of the dehydration with the desiccant may be increased, and water alone may be removed from the refrigerant with good efficiency.

### Embodiment 6

A refrigeration cycle apparatus according to Embodiment 6 will be described. Refrigerating machine oils generally contain anti-wear agents. Anti-wear agents have a function to prevent the wearing of sliding units by the decomposition of the agents themselves. It is known that products of the decomposition of an anti-wear agent react with decomposition products of an ethylenic fluorohydrocarbon susceptible to polymerization and decomposition or a mixture including such a fluorohydrocarbon to form solids. Such solids are accumulated in narrow passages such as an expansion valve or a capillary tube in the refrigeration cycle, possibly causing the clogging of the passage and a consequent cooling failure. In Embodiment 6, the refrigerating machine oil is selected appropriately to ensure that no anti-wear agents are present in the oil. In this manner, it is possible to prevent the occurrence of solids by the reaction of decomposition products of an anti-wear agent with decomposition products of the ethylenic fluorohydrocarbon or a mixture including such a fluorohydrocarbon. Consequently, the refrigerant circuit may be prevented from clogging and the refrigeration cycle apparatus can exhibit good performance over a long term.

### Other Embodiments

The Embodiments are not limited to Embodiments 1 to 6 discussed hereinabove, and various modifications are possible.

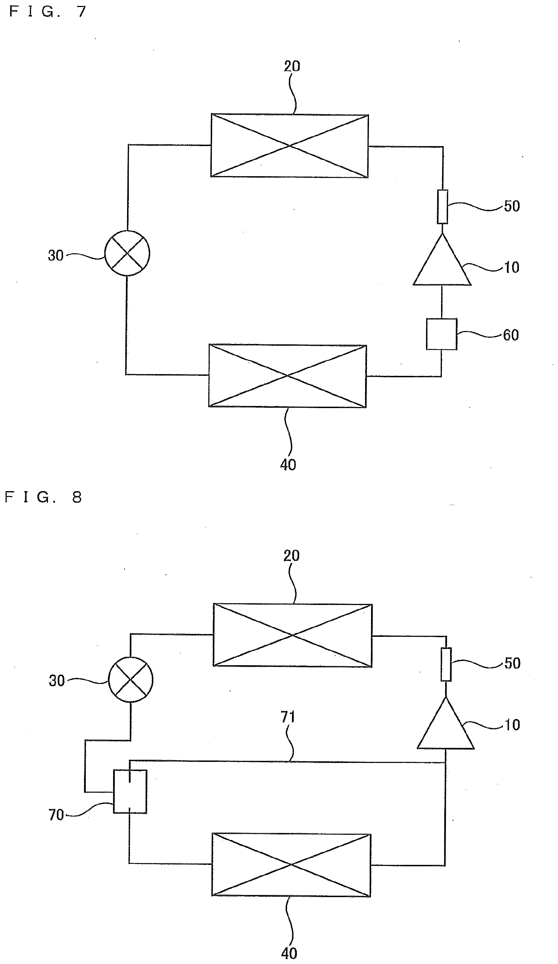

For example, the configurations of the refrigerant circuits are not limited to those described in Embodiments 1 to 6. Fig. 7 is a refrigerant circuit diagram illustrating an exemplary modified configuration of the refrigeration cycle apparatus according to Embodiment 1. As illustrated in Fig. 7, the refrigeration cycle apparatus of this modified embodiment includes an accumulator 60 disposed on the suction side of the compressor 10. The accumulator 60 is a gas-liquid separator that is disposed on the low-pressure side, separates the refrigerant coming out from the evaporator 40 into gas and liquid, and allows the extra refrigerant to be accumulated therein. The refrigeration cycle apparatus of this modified embodiment achieves the same effects as in Embodiment 1. Further, the configuration of the refrigerant circuit illustrated in Fig. 7 may be applied to Embodiments 2 to 6, whereby each of the effects obtained in Embodiments 2 to 6 may be obtained.

Fig. 8 is a refrigerant circuit diagram illustrating another exemplary modified configuration of the refrigeration cycle apparatus according to Embodiment 1. As illustrated in Fig. 8, the refrigeration cycle apparatus of this modified embodiment includes a gas-liquid separator 70 that is disposed downstream from the expansion device 30 and upstream from the evaporator 40 and separates the refrigerant coming out from the expansion device 30 into gas and liquid. The liquid-phase refrigerant separated in the gas-liquid separator 70 is supplied to the evaporator 40, while the gas-phase refrigerant is supplied to the suction side of the compressor 10 via a bypass pipe 71 that bypasses the evaporator 40. The refrigeration cycle apparatus of this modified embodiment achieves the same effects as in Embodiment 1. Further, the configuration of the refrigerant circuit illustrated in Fig. 8 may be applied to Embodiments 2 to 6, whereby each of the effects obtained in Embodiments 2 to 6 may be obtained.

Further, refrigerant circuits other than the refrigerant circuits illustrated in Fig. 7 and Fig. 8 (for example, a refrigerant circuit including an ejector, a refrigerant circuit including an intermediate heat exchanger, a refrigerant circuit including a four-way valve) may be applied to Embodiments 1 to 6, whereby each of the effects obtained in Embodiments 1 to 6 may be obtained.

Furthermore, Embodiments 1 to 6 and the modified embodiments may be implemented in any combinations. For example, the refrigeration cycle apparatus 1 of Embodiment 1 may use the hygroscopic refrigerating machine oil used in Embodiment 2 or 3.

### Reference Signs List

1, 2, 4 refrigeration cycle apparatus 10 compressor 20 condenser 30 expansion device 40 evaporator 50 dryer 60 accumulator 70 gas-liquid separator 71 bypass pipe 81 refrigerant inlet 82, 84 branched pipe 83, 85 valve 86 refrigerant cylinder

## Claims

1. A refrigeration cycle apparatus comprising:
a refrigerant circuit including at least a compressor (10), a condenser (20), an expansion device (30), and an evaporator (40), the refrigerant circuit circulating refrigerant being an ethylenic fluorohydrocarbon or a mixture including an ethylenic fluorohydrocarbon; and
a moisture absorbing unit configured to absorb water in the refrigerant,
wherein the moisture absorbing unit includes at least one dryer (50) configured to allow the refrigerant to pass therethrough, and to absorb water in the passing refrigerant, and **characterised in that** the at least one dryer includes two dryers each disposed on the discharge side of the compressor and on an inlet side of the expansion device in the refrigerant circuit.

2. The refrigeration cycle apparatus of claim 1, wherein the moisture absorbing unit includes a dryer (50) configured to allow the refrigerant to pass therethrough, and to absorb water in the passing refrigerant, and the dryer is disposed in a refrigerant inlet (81) configured to allow the refrigerant to be charged into the refrigerant circuit.

3. The refrigeration cycle apparatus of claims 1 or 2, wherein the dryer (50) includes a desiccant, and
the desiccant has a pore size of 0.275 nm to 0.334 nm.

4. The refrigeration cycle apparatus of any one of claims 1 to 3, wherein the moisture absorbing unit includes a hygroscopic refrigerating machine oil.

5. The refrigeration cycle apparatus of claim 4, wherein the refrigerating machine oil is a polyalkylene glycol oil, a polyvinyl ether oil, or another ether oil having an ether bond.

6. The refrigeration cycle apparatus of claim 4, wherein the refrigerating machine oil is at least one oil having an ester bond selected from an ester oil, a carbonate oil, and a polyol ester oil.

7. The refrigeration cycle apparatus of any one of claims 1 to 6, wherein the ethylenic fluorohydrocarbon includes any one of fluoroethylene (R1141), trans-1,2-difluoroethylene (R1132 (E)), cis-1,2-difluoroethylene (R1132 (Z)), 1,1-15 difluoroethylene (R1132a), and 1,1,2-trifluoroethylene (R1123).

## Patentansprüche

1. Kühlkreislauf-Vorrichtung, umfassend:
einen Kältemittelkreislauf, umfassend zumindest einen Verdichter (10), einen Kondensator (20), eine Expansionseinrichtung (30) und einen Verdampfer (40), wobei der Kältemittelkreislauf Kältemittel zirkuliert, das ein ethylenischer Fluorkohlenwasserstoff oder eine Mischung, die einen ethylenischen Fluorkohlenwasserstoff enthält, ist; und
eine feuchtigkeitsabsorbierende Einheit, die eingerichtet ist, Wasser im Kältemittel zu absorbieren,
wobei die feuchtigkeitsabsorbierende Einheit mindestens einen Trockner (50) aufweist, der eingerichtet ist, dem Kältemittel zu erlauben, durch ihn hindurch zu gehen und Wasser im hindurchgehenden Kältemittel zu absorbieren, und
**dadurch gekennzeichnet, dass** der mindestens eine Trockner zwei Trockner umfasst, die jeweils auf der Auslassseite des Verdichters und auf einer Einlassseite der Expansionseinrichtung im Kältemittelkreislauf angeordnet sind.

2. Kühlkreislauf-Vorrichtung nach Anspruch 1, wobei die feuchtigkeitsabsorbierende Einheit einen Trockner (50) aufweist, der eingerichtet ist, dem Kältemittel zu erlauben, durch ihn hindurch zu gehen und Wasser im hindurchgehenden Kältemittel zu absorbieren, und der Trockner in einem Kältemitteleinlass (81) angeordnet ist, der eingerichtet ist, dem Kältemittel zu erlauben, in den Kältemittelkreislauf geladen zu werden.

3. Kühlkreislauf-Vorrichtung nach Ansprüchen 1 oder 2, wobei der Trockner (50) ein Trockenmittel umfasst, und
das Trockenmittel eine Porengröße von 0,275 nm bis 0,334 nm aufweist.

4. Kühlkreislauf-Vorrichtung nach einem der Ansprüche 1 bis 3, wobei die feuchtigkeitsabsorbierende Einheit ein hygroskopisches Kältemaschinenöl umfasst.

5. Kühlkreislauf-Vorrichtung nach Anspruch 4, wobei das Kältemaschinenöl ein Polyalkylenglykolöl, ein Polyvinyletheröl oder ein anderes Etheröl mit einer Etherbindung ist.

6. Kühlkreislauf-Vorrichtung nach Anspruch 4, wobei das Kältemaschinenöl zumindest ein Öl mit einer Esterbindung ist, ausgewählt aus einem Esteröl, einem Carbonatöl und einem Polyolesteröl.

7. Kühlkreislauf-Vorrichtung nach einem der Ansprüche 1 bis 6, wobei der ethylenische Fluorkohlenwasserstoff eines von Fluorethylen (R1141), trans-1,2-Difluorethylen (R1132 (E)), cis-1,2-Difluorethylen (R1132 (Z)), 1,1-15-Difluorethylen (R1132a) und 1,1,2-Trifluorethylen (R1123) enthält.

## Revendications

1. Appareil à cycle de réfrigération comprenant :
un circuit de réfrigérant comprenant au moins un compresseur (10), un condenseur (20), un dispositif d'expansion (30), et un évaporateur (40), le réfrigérant qui circule dans le circuit de réfrigérant étant un fluorohydrocarbone éthylénique ou un mélange comprenant un fluorohydrocarbone éthylénique ; et
une unité d'absorption de l'humidité configurée pour absorber l'eau dans le réfrigérant,
dans lequel l'unité d'absorption d'humidité comprend au moins un séchoir (50) configuré pour permettre au réfrigérant de passer à travers, et pour absorber l'eau dans le réfrigérant qui passe, et
**caractérisé en ce que**
le au moins un séchoir comprend deux séchoirs chacun disposés côté évacuation du compresseur et côté admission du dispositif d'expansion dans le circuit de réfrigérant.

2. Appareil à cycle de réfrigération selon la revendication 1, dans lequel l'unité d'absorption d'humidité comprend un séchoir (50) configuré pour permettre au réfrigérant de passer à travers, et pour absorber l'eau dans le réfrigérant qui passe, et le séchoir est disposé dans une admission de réfrigérant (81) configurée pour permettre au réfrigérant d'être chargé dans le circuit de réfrigérant.

3. Appareil à cycle de réfrigération selon la revendication 1 ou 2, dans lequel le séchoir (50) comprend un dessiccant, et le dessiccant possède une taille de pores de 0,275 nm à 0,334 nm.

4. Appareil à cycle de réfrigération selon l'une quelconque des revendications 1 à 3, dans lequel l'unité d'absorption de l'humidité comprend de l'huile pour machine de réfrigération hygroscopique.

5. Appareil à cycle de réfrigération selon la revendication 4, dans lequel l'huile pour machine de réfrigération est une huile de glycol polyalkylène, une huile d'éther polyvinylique, ou une autre huile d'éther ayant une liaison d'éther.

6. Appareil à cycle de réfrigération selon la revendication 4, dans lequel l'huile pour machine de réfrigération est au moins une huile ayant une liaison d'ester choisie parmi une huile d'ester, une huile de carbonate, et une huile d'ester de polyol.

7. Appareil à cycle de réfrigération selon l'une quelconque des revendications 1 à 6, dans lequel le fluorohydrocarbone éthylénique comprend n'importe lequel de fluoroéthylène (R1141), de trans-1,2-difluoroéthylène (R1132) (E)), de cis-1,2-difluoroéthylène (R1132 (Z)), de 1,1-15 difluoroéthylène (R1132a), et de 1,1,2-trifluoroéthylène (R1123).
